# EUROPÄISCHE PATENTANMELDUNG

(11) **EP 1 026 700 A2**
(43) Veröffentlichungstag der Anmeldung: **09.08.2000**
(21) Anmeldenummer: 00100616.2
(22) Anmeldetag: 13.01.2000
(51) Int. Cl.: H01B 3/00, C08K 13/02

(54) **Halogenfreie intumeszierende Ummantelung von Drähten und Lichtkabeln**

(30) Priorität: 03.02.1999 AT 13899
(71) Anmelder: DSM Fine Chemicals Austria GmbH, 4021 Linz (AT)
(72) Erfinder: Horacek, Heinz, 4040 Linz (AT)
(74) Vertreter: Klostermann, Ingrid

(57) **Zusammenfassung**

Die Erfindung betrifft halogenfreie Kabelummantelungen für Drähte und Lichtkabel, bestehend aus einem halogenfreien Kunststoff, einer intumeszierenden Komponente und einem anorganischen Glasbildner, der im Brandfall einen feuerbeständigen anorganischen Schaumstoff ausbildet.

## Beschreibung

Die Erfindung betrifft halogenfreie intumeszierende Ummantelungen von Drähten und Lichtkabeln.

In der DE-A 36 33 056 sind extrudierfähige Mischungen zur Herstellung einer habgenfreien und schwer entflammbaren Umhüllung von langgestrecktem Gut, wie elektrischen Kabeln oder Leitungen u. dgl. wobei die Mischung aus einem Copolymer des Ethylens mit einem Monomeranteil von 10-30 Gew.% als Basismaterial und einer die Wärmestandfestigkeit erhöhenden Komponente, deren Anteil an der Gesamtmenge Polymer 10 - 50 Gew.% beträgt, besteht.

In der EP-A 0 831 120 ist eine feuerhemmende Mischung für Polymerkomponenten beschrieben, die Magnesiumhydroxid, Calciumcarbonat und mindestens eine Phosphor enthaltende Komponente und mindestens eine Stickstoff enthaltende Komponente enthält.

Die beschriebenen Mischungen enthalten keine intumeszierende Komponente, sodass im Brandfall der Funktionserhalt der ummantelten Kabel äußerst kurz bleibt. Außerdem besteht ein weiterer Nachteil dieser Mischungen darin, dass die begrenzt andauernde Schutzwirkung bei hohen Temperaturen schnell nachläßt.

In US 4,728,574 wird ein Isolator aus 100 Teilen Ethylenvinylacetat und 150 Teilen Ammoniumpolyphosphat (APP) beansprucht.

JP 84-58899 beschreibt eine Kabelummantelung aus 45 % Polyethylen, 10,5 % PER, 9,5 % Melamin, 20 % APP, 5 % einer Halogenverbindung und 5% Antimonpentoxid. In JP 84-58900 wird eine analog zusammengesetzte Zusammensetzung, allerdings in vernetzter Form beansprucht.

In den US 5,227,416 US 5,185,102 und US 5,130,349 werden Polyethylenkabelummantelungen mit APP und Tris-(2-hydroxy-etyhl)isocyanurat ausgerüstet.

In der US 4,328,139 werden Polyolefinzusammensetzungen beschrieben, die als intumeszierende Flammhemmer Acrylatpolyole mit P₂O₅, Melamin, Dicyanamid und Harnstoff enthalten.

In der US-A 3,576,940 wird ein Kabel, das aus einem metallischem Leiter, einer Isolation, die den Leiter umhüllt, aus Glasfasern, Silikongummi und Asbesifasern besteht beschrieben, die mit einem intumeszierenden Material imprägniert werden.

All diesen vorgeschlagenen Lösungen fehlt die glasbildende intumeszierende Komponente, die zur Ausbildung eines feuerbeständigen anorganischen Schaumstoffs im Brandfall befähigt. Ferner beinhalten die Zusammensetzungen teilweise auch Halogenverbindungen, die im Brandfall giftige Gase absondern und so zu einer Gefährdung von Mensch und Umwelt führen können.

In Fröse H.-D., Brandschutz für Kabel und Leitungen, München 1998, S 101 ff wird zur Verbesserung des Funktionserhalts von Kabeln im Brandfall die Verwendung von Flammschutzbarrieren, insbesondere die Verwendung von Glas-Glimmer-Bändern vorgeschlagen. Diese Bänder werden je nach Anforderung an unterschiedlichen Positionen, entweder zwischen Innen- und Außenmantel oder über der Isolierung der einzelnen Ader oder über dem Leiter jeder einzelnen Ader angeordnet. Als Nachteil wird angegeben, dass sich dadurch die Flexibilität des Kabels verringert, das Kabel also steifer wird und dadurch ein zusätzlicher Aufwand bei der Installation der Kabel erforderlich wird.

Die Prüfung des Funktionserhalts erfolgt nach DIN 4102, Teil 12. Dementsprechend werden die Kabel auf einem Prüfstand von mindestens 3 m Länge gemäß einer sog. Einheitstemperaturkurve über einen Zeitraum von mindestens 90 Minuten bei Temperaturen bis 1000°C auf die erforderliche Sicherheit hinsichtlich eines etwaigen Kurzschlusses oder einer Unterbrechung des Stromflusses getestet. Ein Funktionserhalt bei einer Exposition des Kabels bis zu einer Temperatur von 1000°C stellt die höchste Funktionserhaltklasse dar. Ein Funktionserhalt dieser Kategorie wird beispielsweise in Wasserdruckerhöhungsanlagen zur Löschwasserversorgung, in Lüftungsanlagen in Sicherheitstreppenräumen, innenliegenden Treppenräumen, Fahrschächten von Aufzügen und deren Triebwerksräumen, in Rauch- und Wäremeabzugsanlagen und in Feuerwehraufzügen gefordert.

Der Erfindung lag daher die Aufgabe zugrunde eine halogenfreie Kabelummantelung für Drähte und Lichtkabel bereitzustellen, die im Brandfall die strom- bzw. lichtführende Funktion der Drähte bzw. Kabel länger als die im Stand der Technik beschriebenen Maßnahmen erhält, nämlich mindestens 90 Minuten, und die die Eigenschaften bezüglich Flexibilität nicht verschlechtert.

Gegenstand der Erfindung sind daher halogenfreie Kabelummantelungen für Drähte und Lichtkabel, dadurch gekennzeichnet, dass sie aus einem halogenfreien Kunststoff, einer intumeszierenden Komponente und einem anorganischen Glasbildner, der im Brandfall einen feuerbeständigen anorganischen Schaumstoff ausbildet, bestehen.

Als halogenfreie Kunststoffe kommen Thermoplaste und Elastomere, wie z.B. Polyethlen, Polyvinylacetatcopolymere, Ethylenacrylatcopolymere, Ethylenethylacrylatcopolymere, Ethylenbutylacrylatpolymere, Polypropylen, Polyamid, Naturkautschuk, Butylkautschuk, Styrolbutadienkautschuk, Nitrilkautschuk, Ethylenpropylenkautschuk, EPDM-Kautschuk, Ethylenpropylenterpolymerkautschuk, Silikonkautschuk, thermoplastischem Polyurethan und auch deren Mischungen, beispielsweise Mischungen von Polyethylenen mit Kautschuken in Frage.

Als intumeszierende Flammhemmer kommen Ammoniumpolyphosphat, Melamin und Dipentaerythrit, Posphorsäureester von Polyalkoholen, wie Glycerinphosphat oder Sorbitolphosphat, Guanidinformaldehydharzphosphate, Melaminformaldehydharzphosphate, Vermikulargraphite, Wasserglas und Blähglimmer und deren Mischungen in Betracht.

Als anorganische Glasbildner finden Salze der Borsäure, wie beispielsweise Zinkborat oder Calciumborat, Salze der Kieselsäure wie Wollastonit, Kaolin, Ton oder Fritte oder Salze der Phosphorsäure wie Calciumphosphat, Magnesiumphosphate, Zinkphosphat, Aluminiumphosphat oder Aluminiumdihydrogenphosphat Verwendung.

Ferner können die Kunststoffmischungen herkömmliche Füllstoffe, Antioxidantien, Stabilisatoren, Haftvermittler, Vernetzer, Weichmacher u. dgl. enthalten.

Beispiele für solche Füllstoffe sind Calciumcarbonat, Magnesiumcarbonat, Aluminiumoxidhydrate, Magnesiumhydroxide, Kreide, Talkum, Zinkoxid u. dgl. und deren Mischungen.

Als Antioxidantien kommen Irganox1010®, Penterythrittetrakis-3,5-ditertiärbutyl4-hydroxypropionat, Dilaurylthiopropionat u. dgl. in Frage.

Als Haftvermittler werden üblicherweise Silane, bespielsweise Vinyltris(t-butyl)peroxysilan eingesetzt.

Als Vernetzungsmittel kommen Peroxide, beispielweise Benzoylperoxid, 2,5-Dimethyl-2,5-di(t-butylperoxy)hexan, Dicumylperoxid oder Bis-(t-butylperoxypropyl)benzol, oder hydrolysierbare Silane, beispielsweise Tris-(t-butyl)vinylsilan oder Ethoxy-, Methoxyvinylsilane, wie Silan A 172 in Frage.

Als Weichmacher werden übliche Weichmacher, beispielsweise Paraffinöle, Paraffinwachse, Stearinsäure eingesetzt.

Als Stabilisatoren werden 2,6 Di-t-butylcresol, Tris(nonylphenyl)phosphit, Distearylpentaerythritdiphosphit u. dgl. eingesetzt.

Erfindungsgemäß beträgt der Anteil an Kunststoff in der Zusammensetzung 20 - 50 Gew.%, vorzugsweise 25 - 35 Gew%, der Anteil das anorganischen Glasbildners 20 - 35 Gew%, vorzugsweise 25 - 30 Gew% und der Anteil der intumeszierenden Komponente 20 - 35 Gew%, vorzugsweise 25 - 30 Gew%.

Die Herstellung der Ummantelung erfolgt nach den in Encyclopedia of Chemical Technology Vol. 14 4^{th} Ed. J.Wiley + Sons/New York (1995) p. 640 und in Encyclopedia of Polymer Science and Engineering 2^{nd} Ed., Vol. 17 J. Wiley + Sons/New York (1989) p. 828 beschriebenen Verfahren.

Die oben beschriebenen Kunststoffe werden, allein oder in Mischung vorliegend, peroxidisch oder mit Silanen vernetzt. Dazu werden in einem Extruder die Kunststoffkomponente, die intumeszierende Komponente und der Glasbildner mit dem Vernetzer gemischt. Die homogene Masse wird um den Draht oder das Lichtkabel geformt und gegebenenfalls mit Wasserdampf zur Vernetzung nachbehandelt.

Ein Lichtkabel hat einen komplizierteren Aufbau.
Die Glasfaser wird mit Silikon, das thermisch oder durch UV-Bestrahlung aushärtet, bzw. mit einem Schmelzklebekautschuk oder einem UV-härtendem Polyacrylat als Primärcoating und mit Nylon oder Polyacrylat als Sekundärcoating beschichtet. Als Füllmaterial wird mit Öl verdünntes Polybutylen verwendet.
Eine Röhre aus Polyproplyen umschließt das Ganze. Um mehrere solche Röhren wird ein Klebeband aus einem Träger aus orientiertem Polyethylenterephthalat und einem druckempfindlichen Acrylatklebstoff herumgewickelt. Als Verstärkungamaterial dienen Fasern aus Aramid, Stahl oder Glas.
Die Ummantelung erfolgt wie bei Kupferkabeln mit Thermoplasten, wie Polyethylen, PVC oder thermoplastischem Polyurethan via Extrusion.
Lichtkabeln, die wie in der Encycolpedia of Polymer Science and Technology Engineering 2nd Ed. Vol 7 (1989), J. Wiley & Sons, New York, p 1 ff beschrieben, hergestellt worden sind, wurden mit thermoplastischem Polyurethan, das mit der erfindungsgemäßen Ausrüstung versehen worden ist, ummantelt.
Die so gefertigten Kabel wurden auf ihre Funkrionsbeständigkeit im Brandfall nach DIN 4102 Teil 12 geprüft.

### Herstellverfahren 1:

In einem Zweischneckenextruder wurde Polyethylen mit einer intumeszierenden Mischung aus Ammoniumpolyphosphat, Dipentaerythrit und Melamin, calziniertem Ton als Glasbildner und Peroxiden als Vernetzer zusammen mit Paraffinwachs, Stearin und Antioxidantien zu einer homogenen Masse verarbeitet. Anschließend wird das Extrudat bei 130°C zu einer Drahtummantelung geformt und um den metallsichen Draht gegeben. Der so isolierte Draht wird in eine 125m lange Röhre, die mit überhitztem Wasserdampf von 20 bar gefüllt ist, geleitet, Die Vernetzung der Kabelummatelung erfolgt bei 210°C.

### Herstellverfahren 2:

Auf einem Zweischneckenextruder wurde EPDM Nordel 4167 mit Neopentylglykolphosphat als Intumeszenzverbindung, Zinkborat als Glasbildner und Trialkyloxyvinylsilan als Vernetzer neben Antioxidantien und LPDE zu einer homogenen Masse verarbeitet.
In Gegenwart von Wasser und einem Kondensationskatalysator, wie Titanate, erfolgt die Hydrolyse zu Silolgruppen, gefolgt von der Kondensation der Silanverbindungen. Die weitere Vorgangsweise entspricht der in obigem Beispiel 1 angegebenen.

Die Prüfung des Funktionserhaltes im Brandfall erfolgte jeweils gemäß DIN 4102 Teil 12.

Nach einem der beiden Beispiele wurden folgende Zusammensetzungen hergestellt.

Die Extrusionstemperatur lag bei ca. 200°C und wurde dem verwendeten Elastomeren bzw. Thermoplasten angepaßt. Bei Polyetyhlenvinylacetat Levaprem 500 HV (Fa. Bayer) lag die Massetemperatur bei 280°C und die Düsentemperatur bei 220°C, bei thermoplastischem Polyurethan Elastollan 1185 A10 (Fa. BASF) bei 200°C und 180°C, bei EPDM-Kautschuk Nordel IP 3720 und 4167 (Fa. DuPont) bei 200°C und 220°C, sowie bei Polyolefinelastomeren Engage 8200 bei 190°C und 210°C.

### Beispiel 1:

| Zusammensetzung | Teile |
|---|---|
| Kautschuk: Nordel 4167® | 100 |
| LDPE: Daplen 2410F® | 10 |
| Anorganischer Glasbildner: Ton | 100 |
| Intumeszenzverbindung: DPER:M:APP = 1:2:6 Dipentaerythrit:Melamin:Ammoniumpolyphosphat | 100 |
| Paraffinwachs | 3 |
| Paraffinöl | 50 |
| Stearinsäure | 2 |
| Zinkoxid | 2 |
| Antioxidationsmittel: Pentaerythrittetrakis3(3, 5-di t-butyl-4-hydroxyphenylpropionat : Dilaurylthiopropionat = 1:1 | 1 |
| Haftvermittler: Vinyltris-(t-butyl)peroxysilan | 2 |
| Vernetzer: Bis(t-butylperoxyisopropyl)benzol | 5 |

Funktionserhalt nach DIN 4102 Teil 12: 120 min

### Beispiel 2:

| Zusammensetzung | Teile |
|---|---|
| Kautschuk: Levapren HU 500® | 100 |
| Anorganischer Glasbildner: Zinkborat | 100 |
| Intumeszenzverbindung: NPGP (Neopentylglykolphosphat) | 100 |
| Paraffinwachs | 5 |
| Paraffinöl | 40 |
| Stearinsäure | 2 |
| Zinkoxid | 1 |
| Antioxidationsmittel: Pentaerythrittetrakis3(3,5-di t-butyl-4-hydroxyphenylpropionat : Dilaurylthiopropionat = 1:1 | 1 |
| Haftvermittler: Vinyltris-(t-butyl)peroxysilan | 1 |
| Vernetzer: Tris-t-butylvinylsilan | 6 |

Funktionserhalt gemäß DIN 4102 Teil 12: 150 min

### Beispiel 3:

| Zusammensetzung | Teile |
|---|---|
| Kautschuk: Levapren HU 500® | 100 |
| Anorganischer Glasbildner: Aluminiumdihydrogenphosphat | 100 |
| Intumeszenzverbindung: Guanidinformaldeydharzphosphat | 100 |
| Paraffinwachs | 5 |
| Paraffinöl | 40 |
| Stearinsäure | 2 |
| Zinkoxid | 1 |
| Antioxidationsmittel: Pentaerythrittetrakis3(3,5-di t-butyl-4-hydroxyphenylpropionat : Dilaurylthiopropionat = 1:1 | 1 |
| Haftvermittler: Vinyltris-(t-butyl)peroxysilan | 2 |
| Vernetzer: Bis(t-butylperoxyisopropyl)benzol | 5 |

Funktionserhalt gemäß DIN 4102 Teil 12 : 130 min

### Beispiel 4:

| Zusammensetzung | Teile |
|---|---|
| Kautschuk: Levapren HU 500® | 100 |
| Anorganischer Glasbildner: Borax | 100 |
| Intumeszenzverbindung: Melaminformaldehydharzphosphat (MFP) | 100 |
| Paraffinwachs | 5 |
| Paraffinöl | 40 |
| Stearinsäure | 2 |
| Zinkoxid | 1 |
| Antioxidationsmittel: Pentaerythrittetrakis3(3,5-di t-butyl-4-hydroxyphenylpropionat : Dilaurylthiopropionat = 1:1 | 1 |
| Haftvermittler: Vinyl-tris-(t-butyl)peroxysilan | 2 |
| Vernetzer: Bis(t-butylperoxyisopropyl)benzol | 6 |

Funktionserhalt gemäß DIN 4102 Teil 12: 120 min

### Beispiel 5:

| Zusammensetzung | Teile |
|---|---|
| Kautschuk: Nordel IP 3723P® | 100 |
| LDPE: Daplen 2410 F® | 20 |
| Anorganischer Glasbildner: Wollastonit | 100 |
| Intumeszenverbindung: DPER:M:APP = 1:2:6 | 100 |
| Paraffinwachs | 5 |
| Paraffinöl | 50 |
| Stearinsäure | 1 |
| Zinkoxid | 3 |
| Antioxidationsmittel: Irganox 1010 : Tinuvin P = 1:1 | 2 |
| Haftvermittler: Vinyltris-(t-butyl)peroxysilan | 3 |
| Vernetzer: Bis(t-butylperoxyisopropyl)benzol | 5 |

Funktionserhalt nach DIN 4102 Teil 12: 110 min

### Beispiel 6:

| Zusammensetzung | Teile |
|---|---|
| Kautschuk: Nordel IP 3720® | 100 |
| LDPE: Daplen 2410F® | 10 |
| Anorganischer Glasbildner: Kaolin | 100 |
| Intumeszenzverbindung: NPGP | 50 |
| Paraffinwachs | 10 |
| Paraffinöl | 25 |
| Stearinsäure | 1 |
| Zinkoxid | 1 |
| Antioxidationsmittel: Irganox 1010 : Tinuvin P = 1:1 | 1 |
| Haftvermittler: Vinyltris-(t-butyl)peroxysilan | 2 |
| Vernetzer: Bis(t-butylperoxyisopropyl)benzol | 4 |

Funktionserhalt nach DIN 4102 Teil 12: 120 min

### Beispiel 7:

| Zusammensetzung | Teile |
|---|---|
| Kautschuk: Engage 8200® | 100 |
| LDPE: Daplen 2410 F® | 30 |
| Anorganischer Glasbildner: Aluminiumdhydrogenphosphat | 100 |
| Intumeszenzverbindung: NPGP | 100 |
| Paraffinwachs | 5 |
| Paraffinöl | 40 |
| Stearinsäure | 1 |
| Zinkoxid | 0 |
| Antioxidationsmittel: Irganox 1010 : Tinuvin P = 1:1 | 1 |
| Haftvermittler: Vinyltris-(t-butyl)peroxysilan | 3 |
| Vernetzer: Bis(t-butylperoxyisopropyl)benzol | 3 |

Funktionserhalt nach DIN 4102 Teil 12: 130 min

### Beispiel 8:

| Zusammensetzung | Teile |
|---|---|
| Kautschuk: Levapren HU 600® | 100 |
| LDPE: Daplen 2410F® | 20 |
| Anorganischer Glasbildner: Ton:Zinkborat = 1:1 | 100 |
| Intumeszenzverbindung: Sorbitolphosphat | 100 |
| Paraffinwachs | 0 |
| Paraffinöl | 30 |
| Stearinsäure | 1 |
| Zinkoxid | 5 |
| Antioxidationsmittel: Irganox 1010 : Tinuvin P = 1:1 | 2 |
| Haftvermittler: Vinyltris-(t-butyl)peroxysilan | 2 |
| Vernetzer: Bis(t-butylperoxyisopropyl)benzol | 5 |

Funktionserhalt nach DIN 4102 Teil 12: 125 min

Die folgenden Beispiele beschreiben erfindungsgemäße Ummantelungen von Lichtkabeln

### Beispiel 9:

| Zusammensetzung | Teile |
|---|---|
| Kautschuk: Elastollan 1185 A 10 | 100 |
| Anorganischer Glasbildner: Kaolin | 100 |
| Intumeszenzverbindung: DPER:M:APP =1:2:6 | 100 |
| Stearinsäure | 1 |
| Antioxidationsmittel: 2,6 Di-t-butyl-p-cresol | 0,1 |
| Haftvermittler: γ-Aminopropyltriethoxysilan | 0,5 |

Funktionserhalt nach DIN 4102 Teil 12: 100 min

### Beispiel 10:

| Zusammensetzung | Teile |
|---|---|
| Kautschuk: Elastollan 1185 A 10 | 100 |
| Anorganischer Glasbildner: Zinkborat | 100 |
| Intumeszenzverbindung: NPGP | 100 |
| Stearinsäure | 1 |
| Antioxidationsmittel: 4,4 Di-t-octyldiphenylamin | 0,1 |
| Haftvermittler: N-β-Aminoethyl-γ-aminoprpyltrimethylsilan | 0,5 |

Funktionserhalt nach DIN 4102 Teil 12: 110 min

### Beispiel 11:

| Zusammensetzung | Teile |
|---|---|
| Kautschuk: Elastollan 1185 A 10 | 100 |
| Anorganischer Glasbildner: Na-Al Silikat | 100 |
| Intumeszenzverbindung: GFP | 100 |
| Stearinsäure | 1 |
| Antioxidationsmittel: 2,6 Di-t-butyl-p-cresol | 0,1 |
| Haftvermittler: N-β-Aminoethyl-γ-aminoproypltrimethoxysilan | 0,5 |

Funktionserhalt nach DIN 4102 Teil 12: 120 min

### Beispiel 12:

| Zusammensetzung | Teile |
|---|---|
| Kautschuk: Elastollan 1185 A 10 | 100 |
| Anorganischer Glasbildner: Wollastonit | 100 |
| Intumeszenzverbindung: MFP | 100 |
| Stearinsäure | 1 |
| Antioxidationsmittel: 2,6 Di-t-butyl-p-cresol: 4,4 Di-t-octyldiphenylamin = 1:1 | 0,1 |
| Haftvermittler: γ-Aminopropyltriethoxysilan | 0,5 |

Funktionserhalt nach DIN 4102, Teil 12: 115 min

## Patentansprüche

1. Halogenfreie Kabelummantelungen für Drähte und Lichtkabel, dadurch gekennzeichnet, dass sie aus einem halogenfreien Thermoplasten oder Elastomeren, einer intumeszierenden Komponente und einem anorganischen Glasbildner, der im Brandfall einen feuerbeständigen anorganischen Schaumstoff ausbildet, bestehen.

2. Halogenfreie Kabelummantelung nach Anspruch 1, dadurch gekennzeichnet, dass der Anteil an halogenfreiem Kunststoff 20 - 50 Gew.%, der Anteil das anorganischen Glasbildners 20 - 35 Gew%, und der Anteil der intumeszierenden Komponente 20-35 Gew% beträgt.

3. Halogenfreie Kabelummantelung nach Anspruch 1, dadurch gekennzeichnet, dass der Anteil an halogenfreiem Kunststoff 25 - 35 Gew%, der Anteil das anorganischen Glasbildners 25 - 30 Gew% und der Anteil der intumeszierenden Komponente vorzugsweise 25 - 30 Gew%. beträgt.

4. Halogenfreie Kabelummantelungen nach einem der Ansprüche 1 bis 3, dadurch gekennzeichnet, dass als halogenfreier Kunststoff Polyethylene, Polypropylene, Polyvinylacetat, EPDM-Kautschuk, Polyolefinelastomere, thermoplastisches Polyurethan oder Naturkautschuk eingesetzt wird.

5. Halogenfreie Kabelummantelung nach einem der Ansprüche 1 bis 4, dadurch gekennzeichnet, dass als Kunststoff eine Mischung aus Kautschuk und Polyethylen eingesetzt wird.

6. Halogenfreie Kabelummantelung nach einem der Ansprüche 1 bis 5, dadurch gekennzeichnet, dass als intumeszierende Komponente Ammoniumpolyphosphat, Melamin, Dipentaerythrit, Phosphorsäureester von Polyalkoholen, Guanidinformaldeydharzphosphate und Melaminformaldehydharzphosphate oder Mischungen derselben eingesetzt werden.

7. Halogenfreie Kabelummantelung nach einem der Ansprüche 1 bis 6, dadurch gekennzeichnet, dass als anorganische Glasbildner Borate, Phosphate und Silikate eingesetzt werden.

8. Halogenfreie Kabelummantelung nach einem der Ansprüche 1 bis 7, dadurch gekennzeichnet, dass sie durch Zugabe von Peroxiden oder hydrolisierbaren Silanverbindungen vernetzt wird.

9. Halogenfreie Kabelummantelung nach einem der Ansprüche 1 bis 8, dadurch gekennzeichnet, dass sie zusätzlich Füllstoffe enthält.

10. Halogenfreie Kabelummantelung nach einem der Ansprüche 1 bis 9, dadurch gekennzeichnet, dass die Kabelummantelung zusätzlich Weichmacher, Stabilisatoren und Antioxidantien enthäit.
